# FASCICULE DE BREVET EUROPEEN

(11) **EP 2 574 546 B1**
(45) Date de publication et mention de la délivrance du brevet: **19.11.2014**
(21) Numéro de dépôt: 12006365.6
(22) Date de dépôt: 11.09.2012
(51) Int. Cl.: B64C 27/26, B64C 27/82, B64C 27/12

(54) **Aéronef hybride à voilure tournante**
Hybrid rotary wing aircraft
Hybriddrehflügelflugzeug

(30) Priorité: 29.09.2011 FR 1102947
(43) Date de publication de la demande: 03.04.2013
(73) Titulaire: Airbus Helicopters, 13725 Marignane Cedex (FR)
(72) Inventeur: Moret, Robin, 13300 Salon de Provence (FR)
(74) Mandataire: Pouillot, Laurent Pierre Paul

(56) Documents cités:
- GB-A- 215 366
- GB-A- 895 590
- GB-A- 2 197 629
- US-A- 2 665 859
- US-A1- 2005 151 001

## Description

La présente invention concerne un aéronef hybride à voilure tournante apte à franchir rapidement une grande distance.

Ce concept avancé de giravion vise à allier à un coût raisonnable l'efficacité du vol vertical de l'hélicoptère conventionnel aux performances à grande vitesse de déplacement permises par l'utilisation d'hélices propulsives et l'installation de moteurs modernes.

Afin de bien comprendre l'objectif de l'invention, il convient de rappeler que les principaux matériels volants correspondent aux avions et aux giravions.

On désigne sous le nom de giravion tout appareil dont la sustentation est assurée totalement ou partiellement par au moins une voilure tournante. La voilure tournante comporte usuellement au moins un rotor de grand diamètre et d'axe sensiblement vertical lorsque l'appareil est posé au sol.

On distingue dans la catégorie des giravions plusieurs types distincts.

Tout d'abord, l'hélicoptère dont au moins un rotor principal, entraîné par une motorisation appropriée, assure à la fois la sustentation et la propulsion.

Un hélicoptère peut être équipé de deux rotors de sustentation assurant la sustentation et la propulsion de l'appareil. Ces deux rotors peuvent être agencés l'un derrière l'autre ou être coaxiaux.

On connaît aussi l'autogire qui est un giravion dont le rotor ne reçoit pas de puissance, mais assure la sustentation en tournant en autorotation sous l'effet de la vitesse d'avancement de l'appareil.

Par ailleurs, le girodyne est un giravion intermédiaire entre l'hélicoptère et l'autogire dont le rotor n'assure que la sustentation. Ce rotor est normalement entraîné par une installation motrice pour les phases de décollage, vol stationnaire ou vertical et atterrissage, à l'instar de l'hélicoptère. Un girodyne comporte aussi un système de propulsion additionnel essentiellement différent de l'ensemble rotor. En vol d'avancement, le rotor assure encore la sustentation, mais uniquement en mode autorotation, c'est-à-dire sans transmission de puissance au dit rotor.

On connaît en outre le combiné qui décolle et atterrit comme un hélicoptère, le combiné volant en croisière comme un autogire.

De ces différentes formules de giravion, l'hélicoptère est la plus simple de sorte qu'elle s'est imposée malgré le fait que la vitesse maximale de translation de l'hélicoptère de l'ordre de 300 km/h est faible et inférieure à celle envisageable par les formules de type combiné ou convertible, techniquement plus complexes et plus onéreuses.

On connaît une autre formule novatrice dénommée « hélicoptère hybride » décrite dans le document EP 2 148 814.

Le document EP 2 105 378 présente un aéronef muni d'une voilure tournante, de deux hélices propulsives et d'une surface stabilisatrice à l'avant du fuselage.

L'agencement des hélices permet de dégager les flancs du fuselage de l'aéronef pour l'embarquement et le débarquement de passagers par exemple De plus ces hélices sont disposées à l'arrière de l'aéronef ce qui permet de minimiser le bruit généré par les hélices et perçu par des passagers.

On note aussi, que l'aéronef ne comporte pas de poutre de queue et d'empennage vertical ce qui permet au moins de minimiser le phénomène connu sous la dénomination « tail shake » en langue anglaise.

Selon un autre aspect, la surface stabilisatrice placée à l'avant de l'aéronef permet au moins de minimiser le phénomène connu sous la dénomination « bosse d'assiette ».

On connaît par ailleurs un giravion comprenant deux rotors principaux coaxiaux assurant conjointement la sustentation de l'aéronef, et ne nécessitant de fait pas de dispositif anticouple.

Ce giravion comporte aussi une hélice située à l'extrémité arrière de l'appareil pour assurer la propulsion de l'appareil en vol de croisière, un système de débrayage permettant ou non d'entrainer l'hélice propulsive.

Ce giravion possède alors un système de transmission de puissance aux rotors principaux relativement complexe.

En outre, l'hélice est potentiellement située dans le sillage du fuselage et d'un rotor principal ce qui peut générer du bruit et le phénomène connu sous la dénomination « tail shake ».

Par ailleurs, on connaît un giravion muni d'un rotor principal assurant la sustentation de l'aéronef en vol stationnaire, tout ou partie de la sustentation en vol de croisière, ainsi qu'une partie de la propulsion en vol de croisière.

De plus, le giravion comprend un rotor arrière assurant la fonction anticouple et de contrôle en lacet de l'aéronef, une aile générant un complément de portance en vol de croisière, et une hélice non-débrayable située à l'extrémité arrière de l'appareil pour participer à la propulsion.

On note notamment qu'il n'est pas possible en vol stationnaire d'arrêter la rotation de l'hélice, cette hélice nécessitant alors de la puissance même à poussée nulle.

Le document US 3448946 propose un giravion combiné avec rotor arrière propulsif et rotor arrière anticouple.

Le document US3105659 décrit un aéronef bi-mode fonctionnant dans un mode hélicoptère et dans un mode autogire.

Le document US 2002/0011539 présente un aéronef muni d'hélices propulsives assurant une fonction - anticouple.

Le document CN 1098688 présente un dispositif comprenant un mécanisme différentiel.

On connaît aussi les documents US 2 665 859 A, US 2005/151001 A1, GB 215 366 A, GB 2 197 629 A, et GB 895 590 A.

La présente invention a alors pour objet de proposer un aéronef à voilure tournante tendant à au moins limiter les inconvénients mentionnés précédemment.

Selon l'invention, un aéronef comporte un fuselage, une installation motrice, une voilure tournante munie d'au moins un rotor principal assurant au moins partiellement la sustentation de l'aéronef, une aile assurant au moins partiellement la sustentation de l'aéronef en vol de croisière, l'aile comprenant deux demi-ailes s'étendant de part et d'autre du fuselage, l'aéronef comprenant au moins deux hélices propulsives situées de part et d'autre du fuselage et positionnées chacune sur une demi-aile, l'aéronef comportant un rotor arrière anticouple et de contrôle en lacet.

De plus, l'aéronef comporte un système de transmission reliant l'installation motrice à chaque rotor principal et au rotor arrière pour entraîner en permanence chaque rotor principal et le rotor arrière en vol, ce système de transmission reliant l'installation motrice à chaque hélice par l'intermédiaire d'un mécanisme différentiel contrôlable sur requête par un pilote ou mécanisme de pilotage automatique pour que chaque hélice puisse être entraînée en vol de croisière et puisse ne pas être entraînée en rotation par l'installation motrice au sol, et/ ou en vol stationnaire.

On entend par « vol de croisière » une phase de vol s'effectuant selon une vitesse longitudinale non nulle.

A l'inverse on entend par « vol stationnaire » une phase de vol s'effectuant à une vitesse longitudinale nulle.

Ainsi, le contrôle en lacet et la fonction anticouple sont notamment assurés par le rotor arrière.

La sustentation de l'aéronef est assurée par la voilure tournante et l'aile. On comprend que la participation de l'aile à la sustentation augmente avec la l'augmentation de la vitesse d'avancement de l'aéronef.

Par ailleurs, la propulsion de l'aéronef peut être assurée par la voilure tournante et par les hélices.

Selon l'invention, un mécanisme différentiel permet de mettre en rotation ou ne pas mettre en rotation les hélices, sur requête d'un pilote ou d'un système de pilotage automatisé.

Ainsi, il devient notamment possible d'entraîner les hélices en vol de croisière pour atteindre une grande vitesse d'avancement par exemple, et de ne pas entraîner les hélices notamment au sol et/ ou en vol stationnaire.

L'invention peut alors présenter un des avantages suivants par rapport à un hélicoptère conventionnel :
- la capacité de voler à grande vitesse grâce à la propulsion par hélices et au déchargement aérodynamique de la voilure tournante grâce à l'aile,
- la capacité à accélérer et à freiner en palier à assiette sensiblement nulle grâce aux hélices,
- la capacité à monter avec de très fortes vitesses verticales,
- la capacité à permettre des facteurs de charges importants grâce à l'aile,
- la capacité à piloter l'assiette en vol stationnaire si les hélices sont embrayées,
- une meilleure finesse aérodynamique globale grâce à l'aile.

De plus, en permettant l'arrêt des hélices au sol, le mécanisme différentiel induit une minimisation du bruit émis au sol, une minimisation des risques d'accident pour les personnes circulant au sol à proximité de l'appareil et notamment des passagers voulant embarquer ou débarquer de l'appareil alors que la voilure tournante demeure en rotation.

En permettant l'arrêt des hélices en vol stationnaire, le mécanisme différentiel induit une minimisation de la puissance nécessaire et du bruit émis, et permet au personnel de bord d'opérer depuis une ouverture latérale du fuselage de l'hélicoptère.

On note en outre que le système de commande de pas des hélices peut être simplifié dans le mesure où il ne nécessite ni une réactivité importante ni une redondance. En effet, les hélices ne participant pas au contrôle en lacet de l'aéronef, ou participant qu'en complément du rotor arrière à ce contrôle en lacet, le système de commande de pas des hélices ne doit pas posséder une rapidité et une fiabilité remarquable. Ce système de commande de pas des hélices peut par exemple se limiter à un actionneur classique de pas d'hélice comme sur un avion.

De même, le dimensionnement de l'entraxe des hélices est indépendant des besoins de la fonction anticouple, cette fonction étant au moins majoritairement remplie par le rotor arrière. Ainsi, il ne parait pas nécessaire de réaliser un compromis moyennement satisfaisant pour choisir la position des hélices par rapport au fuselage et les dimensions de l'aile qui les supporte.

Par ailleurs, chaque d'hélice peut être optimisée pour la propulsion, sans compromis avec un fonctionnement en mode dit « reverse » pour une participation à la fonction anticouple.

Selon l'invention, le mécanisme différentiel d'une hélice particulière comporte :
- un pignon d'entrée entraîné par l'installation motrice au travers d'une partie latérale du système de transmission, le pignon d'entrée étant solidaire d'une coquille portant au moins un engrenage satellite,
- un arbre fou traversant le pignon d'entrée, l'arbre fou étant solidaire en rotation d'un engrenage planétaire d'entrée engrenant l'engrenage satellite et étant désolidarisé en rotation du pignon d'entrée,
- un arbre d'hélice entraînant l'hélice particulière, cet arbre d'hélice étant solidaire en rotation d'un engrenage planétaire de sortie, cet engrenage planétaire de sortie engrenant l'engrenage satellite,
- un frein d'hélice pour freiner l'arbre d'hélice et un frein d'entrée pour freiner l'arbre fou.

Ce mécanisme différentiel est donc particulièrement simple et aisé à mettre en oeuvre.

Selon une première utilisation du mécanisme différentiel, en freinant l'arbre d'hélice et en libérant l'arbre fou, on permet au système de transmission d'entraîner l'arbre fou, l'hélice étant à l'arrêt.

En l'absence d'organes consommateur d'énergie, la puissance consommée par l'arbre fou est négligeable. La puissance délivrée par l'installation motrice à la voilure tournante et au rotor arrière est à l'inverse maximisée, même si le système de transmission entraîne néanmoins en permanence un organe agencé sur l'aile, en l'occurrence l'arbre fou dans ce cas de figure.

Selon une deuxième utilisation du mécanisme différentiel, en freinant l'arbre fou et en libérant l'arbre d'hélice, on permet au système de transmission d'entraîner l'hélice, l'arbre fou étant à l'arrêt.

A cet effet, l'aéronef peut comporter un moyen de contrôle pour :
- commander le frein d'hélice afin de bloquer l'arbre d'hélice et commander le frein d'entrée afin de libérer l'arbre fou de manière à remplir une fonction d'arrêt de l'hélice en permettant l'entraînement de l'arbre fou par la partie latérale,
- commander le frein d'hélice afin de libérer l'arbre d'hélice et commander le frein d'entrée afin de bloquer l'arbre fou de manière à remplir une fonction de transmission du mouvement rotatif de la partie latérale à l'arbre d'hélice pour mettre en rotation cette hélice.

Le moyen de contrôle peut être un levier à deux positions permettant de requérir l'une ou l'autre des utilisations précitées du mécanisme différentiel.

Selon une première variante, l'arbre fou engrène une boîte à accessoires.

Cette boîte à accessoires a pour fonction de générer une puissance électrique, hydraulique, pneumatique ou autres par rotation. Par exemple, la boîte à accessoires peut activer un mécanisme de repliage d'une demi-aile ou encore par exemple un treuil intégré dans une demi-aile.

La boîte à accessoires peut être un organe électrique permettant de générer un courant électrique suite à la rotation de l'arbre fou.

Selon une deuxième variante, l'arbre fou est relié à un système de stockage d'énergie cinétique pour bénéficier d'un complément de puissance en cas de panne moteur.

On connaît de tels systèmes notamment dans le domaine automobile, ces systèmes étant implémentés sur des roues de voitures de course.

On comprend que chaque arbre fou peut aussi engrener une boîte à accessoires et être relié à un système de stockage d'énergie cinétique.

Selon un autre aspect, le système de transmission peut comprendre une partie centrale reliée au rotor arrière et à la voilure tournante, ainsi qu'une partie latérale par hélice reliant ladite partie centrale à un mécanisme différentiel d'une hélice, l'ensemble comprenant les demi-ailes ainsi que les hélices, les parties latérales et les mécanismes différentiels est amovible.

Il est alors possible de transformer l'aéronef pour passer d'une configuration à voilure tournante et à voilure fixe à une configuration correspondant à un hélicoptère traditionnel.

Par ailleurs, le système de transmission peut relier l'installation motrice :
- à une première hélice par l'intermédiaire d'un premier mécanisme différentiel contrôlable par un pilote pour que cette première hélice puisse être entraînée par l'installation motrice en vol de croisière et en vol stationnaire, et puisse ne être pas entraînée en rotation par l'installation motrice au sol et en vol stationnaire,
- à une deuxième hélice par l'intermédiaire d'un deuxième mécanisme différentiel contrôlable par un pilote pour que cette deuxième hélice puisse être entraînée par l'installation motrice en vol de croisière et en vol stationnaire, et puisse ne être pas entraînée en rotation par l'installation motrice au sol et en vol stationnaire.

Ainsi, l'installation motrice peut :
- selon un premier mode de fonctionnement, entraîner la voilure tournante, le rotor arrière et les hélices en vol de croisière pour atteindre de grandes vitesses,
- selon un deuxième mode de fonctionnement, entraîner la voilure tournante et le rotor arrière au sol, les hélices étant arrêtées pour notamment protéger les personnes évoluant à proximité de l'aéronef et pour limiter le bruit généré par l'aéronef.

De plus, selon un troisième mode de fonctionnement l'installation motrice entraîne en vol stationnaire la voilure tournante et le rotor arrière, les hélices étant arrêtées.

La capacité d'arrêter les hélices en vol stationnaire peut ainsi limiter au moins un des inconvénients suivants :
- le niveau sonore,
- les risques d'éclatement des hélices lors d'atterrissages sur l'eau ou sur terrain non préparé,
- les risques d'éclatement des hélices en cas de posé sur terrain à forte pente,
- les risques d'éclatement des hélices en cas d'affaissement du train d'atterrissage de l'aéronef.
- la capacité à exploiter des équipements optionnels, par exemple un treuil, au niveau d'une porte latérale de fuselage au cours d'un vol stationnaire, sans risque d'interférence avec les hélices.

De plus, la capacité d'arrêter les hélices en vol stationnaire peut conférer à l'aéronef un rendement optimisé en puissance en vol stationnaire par rapport aux aéronefs comprenant des hélices non débrayables.

Selon un quatrième mode de fonctionnement, l'installation motrice entraîne en vol stationnaire la voilure tournante, le rotor arrière, et une hélice, l'autre hélice étant arrêtée.

Ainsi, l'hélice entraînée en rotation en vol stationnaire coopère avec le rotor arrière pour compenser le couple exercé par le rotor principal de la voilure tournante sur le fuselage.

Il en résulte un rendement optimisé en puissance de la fonction anticouple.

Enfin, chaque demi-aile s'étendant transversalement à partir dudit fuselage d'une zone d'emplanture vers une zone extrémale en passant par une zone intermédiaire portant une hélice, la zone extrémale est liée à la zone intermédiaire par une articulation contrôlable afin que la zone extrémale soit manoeuvrée pour être dirigée vers le sol en vol stationnaire pour minimiser la surface de l'aile impactée par l'air traversant la voilure tournante et pour protéger l'hélice d'un contact avec le sol.

Dès lors, la déportance générée par l'aile en vol stationnaire est minimisée.

On note que la zone extrémale de l'aile peut aussi servir de béquille dans la position dite « pliée », la zone extrémale étant manoeuvrée pour être dirigée vers le sol dans cette position pliée.

L'articulation peut être manoeuvrée par un moteur alimenté par une boîte à accessoires coopérant avec un arbre fou du mécanisme différentiel.

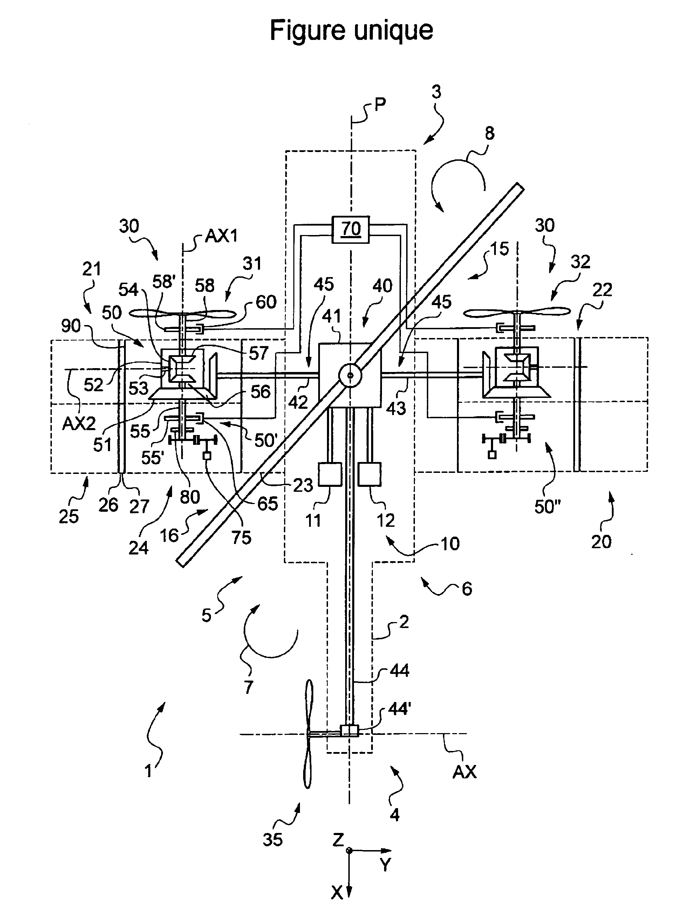

L'invention et ses avantages apparaîtront avec plus de détails dans le cadre de la description qui suit avec des exemples donnés à titre illustratif en référence à l'unique figure annexée.

On note que trois directions X, Y et Z orthogonales les unes par rapport aux autres sont représentées sur la figure.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z*.*

La figure présente un aéronef 1 comprenant un fuselage 2.

Ce fuselage 2 s'étend longitudinalement d'un nez 3 vers une extrémité arrière 4 le long d'un plan antéropostérieur de symétrie P, transversalement d'un premier côté latéral 5 vers un deuxième côté latéral 6, et en élévation d'une partie inférieure 7 vers une partie supérieure 8.

De plus, l'aéronef comporte une voilure tournante 15 à l'aplomb de la partie supérieure 8 du fuselage, cette voilure tournante comprenant au moins un rotor principal 16.

L'aéronef est en outre muni d'un rotor arrière 35 agencé sur l'extrémité arrière 4. Le rotor arrière 35 effectue un mouvement rotatif autour d'un axe transversal AX pour notamment contrer le couple exercé par le rotor principal 16 sur le fuselage 2 et pour le contrôle en lacet de l'aéronef.

Par ailleurs, l'aéronef 1 comporte une aile 20, cette aile ayant deux demi-ailes 21, 22 s'étendant de part et d'autre du fuselage, selon une direction transversale par exemple.

Chaque demi-aile 21, 22 porte alors une hélice 30 propulsive, la première demi-aile 21 portant une première hélice 31 et la deuxième demi-aile 22 portant une deuxième hélice 32.

Ainsi, chaque demi-aile 21, 22 présente, transversalement et successivement à partir du fuselage 2, une zone d'emplanture 23, une zone intermédiaire 24 portant une hélice 30 et par exemple une nacelle de l'hélice et une zone extrémale 25.

La zone extrémale 25 est optionnellement liée à la zone intermédiaire 24 par une articulation 26. Cette articulation peut être contrôlée par un moteur 27 afin que la zone extrémale 25 soit manoeuvrée pour être dirigée sur requête vers le sol en vol stationnaire.

Dans la position pliée obtenue, la surface de l'aile impactée par le souffle traversant la voilure tournante est minimisée. Il en résulte que la déportance générée par l'aile est minimisée en vol stationnaire.

On comprend que la zone extrémale peut représenter la portion de la demi aille allant de l'extrémité libre de l'aile à la nacelle de l'hélice.

Pour mettre en rotation la voilure tournante, le rotor arrière et les hélices, l'aéronef comporte une installation motrice 10. Selon l'exemple représenté, cette installation peut comporter une pluralité de moteurs, en l'occurrence deux moteurs 11, 12.

L'installation motrice 10 met alors en rotation la voilure tournante, le rotor arrière et les hélices en mettant en permanence en mouvement un système de transmission 40 de puissance.

Par exemple, ce système de transmission 40 de puissance comprend une partie centrale 41 entraînée par l'installation motrice 10.

Cette partie centrale 41 est alors reliée au rotor arrière par un arbre de transmission arrière débouchant sur une boîte de transmission arrière 44'.

De plus, la partie centrale 41 peut comprendre un mât entraînant un moyeu du rotor principal 16.

La voilure tournante et le rotor arrière sont alors entraînés en permanence par l'installation motrice.

En outre, le système de transmission peut comprendre une partie latérale 45 par hélice 30 allant de la partie centrale vers une hélice. Ainsi, le système de transmission présenté inclut une première partie latérale 42 allant de la partie centrale vers la première hélice 31 et une deuxième partie latérale 43 allant de cette partie centrale 41 vers la deuxième hélice 32.

On comprend que le système de transmission peut être réalisé de multiples manières sans sortir du cadre de l'invention. Toutefois, il convient de prévoir une partie latérale par hélice, une partie entraînant la voilure tournante et une partie entraînant le rotor arrière.

Un mécanisme différentiel 50 est alors interposé entre chaque partie latérale et chaque hélice pour d'une part permettre l'entraînement de l'hélice par la partie latérale associée dans certaines configurations de vol, et d'autre part, empêcher l'entraînement de l'hélice par la partie latérale associée dans d'autres configurations de vol. Chaque mécanisme différentiel 50 peut être agencé dans la nacelle de l'hélice correspondante.

Un premier mécanisme différentiel 50' est donc interposé entre la première partie latérale 42 et la première hélice 31, un deuxième mécanisme différentiel 50" étant interposé entre la deuxième partie latérale 43 et la deuxième hélice 32.

Il est à noter que l'ensemble comprenant les demi-ailes 21, 22 ainsi que les hélices 30 et les parties latérales 45 et les mécanismes différentiels 50 peut être amovible.

Les mécanismes différentiels permettent sur requête d'entraîner notamment chaque hélice 30 en vol de croisière, et de ne pas d'entraîner les hélices 30 notamment au sol.

Il est aussi possible de ne pas entraîner les deux hélices 30 en vol stationnaire, ou d'entraîner une seule hélice en vol stationnaire.

Dès lors, l'aéronef peut notamment fonctionner selon les quatre modes suivants :
- selon un premier mode de fonctionnement dit « mode de croisière », la voilure tournante, le rotor arrière et les hélices sont entraînés par l'installation motrice en vol de croisière,
- selon un deuxième mode de fonctionnement dit « mode sol », la voilure tournante et le rotor arrière sont entraînés par l'installation motrice au sol, les deux hélices étant arrêtées,
- selon un troisième mode de fonctionnement dit « mode stationnaire », l'installation motrice entraîne en vol stationnaire la voilure tournante et le rotor arrière, les hélices étant arrêtées,
- selon un quatrième mode de fonctionnement dit « mode stationnaire assisté », l'installation motrice entraîne en vol stationnaire la voilure tournante, le rotor arrière, et une hélice, l'autre hélice étant arrêtée.

A cet effet, chaque mécanisme différentiel 50 comprend un pignon d'entrée 51 qui engrène un pignon de la partie latérale 45 associée.

Ce pignon d'entrée 51 est solidaire d'une coquille 52 creuse, la coquille creuse portant un engrenage satellite 54 à l'aide d'un axe de fixation 53.

Le pignon d'entrée 51 et la coquille 52 sont alors solidaires en rotation autour d'un axe longitudinal de symétrie AX1 du pignon d'entrée 51. A l'inverse, l'engrenage satellite 54 peut effectuer un mouvement rotatif par rapport à la coquille 51 autour d'une direction AX2.

De plus, le mécanisme différentiel 50 est muni d'un arbre fou 55 s'étendant le long d'un axe longitudinal de symétrie AX1. L'arbre fou 55 traverse alors le pignon d'entrée.

Par contre, l'arbre fou est désolidarisé en rotation du pignon d'entrée 51, un moyen de roulement étant par exemple interposé entre l'arbre fou et le pignon d'entrée.

Une première extrémité de l'arbre fou saillant à l'intérieur de la coquille 52 est alors solidaire d'un engrenage planétaire d'entrée 56 conique en prise sur l'engrenage satellite 54 conique.

A l'inverse, une deuxième extrémité de l'arbre fou coopère avec un frein d'entrée 65. Ce frein d'entrée 65 peut comprendre une mâchoire apte à enserrer un épaulement 55' de l'arbre fou sur requête d'un moyen de commande 70.

Par ailleurs, le mécanisme différentiel comprend un arbre d'hélice 58 s'étendant le long d'un axe longitudinal de symétrie AX1. Une première partie extrémale de l'arbre d'hélice 58 traverse la coquille 52. On note que l'arbre d'hélice 58 est désolidarisé en rotation de la coquille 52 autour de l'axe longitudinal de symétrie AX1, un moyen de roulement étant par exemple interposé entre la coquille 52 et l'arbre d'hélice 58.

Cette première partie extrémale de l'arbre d'hélice 58 est alors solidaire d'un engrenage planétaire de sortie 57 conique en prise sur l'engrenage satellite 54 conique. L'engrenage planétaire de sortie 57 est alors parallèle à l'engrenage planétaire d'entrée 56.

Une deuxième extrémité de l'arbre d'hélice 58 coopère avec un frein d'hélice 60. Ce frein d'hélice 60 peut comprendre une mâchoire apte à enserrer un épaulement 58' de l'arbre d'hélice 58 sur requête du moyen de commande 70.

Par suite, lorsque le pilote manoeuvre le moyen de commande 70 pour arrêter la rotation d'une hélice 30, le moyen de commande 70 immobilise l'arbre d'hélice 58 à l'aide du frein d'hélice 60 qui immobilise l'épaulement 58' de l'arbre d'hélice 58.

En parallèle, le moyen de commande 70 n'entrave pas l'arbre fou 55 à l'aide du frein d'entrée 65, ce frein d'entrée n'immobilisant pas l'épaulement 55' de l'arbre fou 55.

Par conséquent, la partie latérale met en rotation le pignon d'entrée 51 autour de l'axe longitudinal de symétrie AX1. Ce pignon d'entrée entraîne en rotation, autour de l'axe longitudinal de symétrie AX1, la coquille 52 et l'engrenage satellite 54.

L'engrenage satellite 54 met alors en rotation l'engrenage planétaire d'entrée 56 et donc l'arbre fou.

La puissance consommée par l'arbre fou est alors négligeable.

Il est cependant à noter que l'arbre fou 55 peut engrener une boîte à accessoires 75 et / ou être relié à un système de stockage d'énergie cinétique 80.

Par contre, lorsque le pilote manoeuvre le moyen de commande 70 pour entraîner la rotation d'une hélice 30, le moyen de commande 70 immobilise l'arbre fou 55 à l'aide du frein d'entrée 65, ce frein d'entrée immobilisant l'épaulement 55' de l'arbre fou 55.

En parallèle, le moyen de commande 70 n'entrave pas l'arbre d'hélice 58 à l'aide du frein d'hélice 60, ce frein d'hélice n'immobilisant pas l'épaulement 58' de l'arbre d'hélice 58.

Par conséquent, la partie latérale met en rotation le pignon d'entrée 51 autour de l'axe longitudinal de symétrie AX1. Ce pignon d'entrée entraîne en rotation autour de l'axe longitudinal de symétrie AX1 la coquille 52 et l'engrenage satellite 54.

L'engrenage satellite 54 met alors en rotation l'engrenage planétaire de sortie 57 et donc l'arbre d'hélice 58.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Aéronef (1) comportant un fuselage (2), une installation motrice (10), une voilure tournante (15) munie d'au moins un rotor principal (16) assurant au moins partiellement la sustentation de l'aéronef (1), une aile (20) assurant au moins partiellement la sustentation de l'aéronef (1) en vol de croisière, ladite aile (20) comprenant deux demi-ailes (21, 22) s'étendant de part et d'autre du fuselage (2), ledit aéronef (1) comprenant au moins deux hélices (30) propulsives situées de part et d'autre du fuselage (2) et positionnées chacune sur une demi-aile (21, 22), l'aéronef (1) comportant un rotor arrière (35) anticouple et de contrôle en lacet,
ledit aéronef comportant un système de transmission (40) reliant l'installation motrice (10) à chaque rotor principal (16) et au rotor arrière (35) pour entraîner en permanence chaque rotor principal (16) et le rotor arrière (35), ledit système de transmission (40) reliant l'installation motrice (10) à chaque hélice (30) par l'intermédiaire d'un mécanisme différentiel (50) contrôlable sur requête pour que chaque hélice (30) puisse être entraînée en vol de croisière et puisse ne pas être entraînée en rotation par l'installation motrice (10) au sol, ledit mécanisme différentiel (50) d'une hélice (30) particulière comportant :
- un pignon d'entrée (51) entraîné par l'installation motrice (10) au travers d'une partie latérale (45) dudit système de transmission (40), ledit pignon d'entrée (51) étant solidaire d'une coquille (52) portant au moins un engrenage satellite (54),
- un arbre fou (55) traversant ledit pignon d'entrée (51), ledit arbre fou (55) étant solidaire en rotation d'un engrenage planétaire d'entrée (56) engrenant l'engrenage satellite (54) et étant désolidarisé en rotation dudit pignon d'entrée (51),
- un arbre d'hélice (58) entraînant ladite hélice (30) particulière, cet arbre d'hélice (58) étant solidaire en rotation d'un engrenage planétaire de sortie (57), cet engrenage planétaire de sortie (57) engrenant l'engrenage satellite (54),
- un frein d'hélice (60) pour freiner ledit arbre d'hélice (58) et un frein d'entrée (65) pour freiner l'arbre fou (55).

2. Aéronef selon la revendication 1,
**caractérisé en ce que** l'aéronef comporte un moyen de contrôle (70) pour :
- commander le frein d'hélice (60) afin de bloquer l'arbre d'hélice (58) et commander le frein d'entrée (65) afin de libérer l'arbre fou (55) de manière à remplir une fonction d'arrêt de l'hélice (30) en permettant l'entraînement de l'arbre fou (55) par la partie latérale (45),
- commander le frein d'hélice (60) afin de libérer l'arbre d'hélice (58) et commander le frein d'entrée (65) afin de bloquer l'arbre fou (55) de manière à remplir une fonction de transmission du mouvement rotatif de la partie latérale (45) à l'arbre d'hélice (58) pour mettre en rotation cette hélice (30).

3. Aéronef selon l'une quelconque des revendications 1 à 2,
**caractérisé en ce que** ledit arbre fou (55) engrène une boîte à accessoires (75).

4. Aéronef selon l'une quelconque des revendications 1 à 3,
**caractérisé en ce que** ledit arbre fou (55) est relié à un système de stockage d'énergie cinétique (80).

5. Aéronef selon l'une quelconque des revendications 1 à 4,
**caractérisé en ce que** ledit système de transmission (40) relie l'installation motrice (10) :
- à une première hélice (31) par l'intermédiaire d'un premier mécanisme différentiel (50') contrôlable par un pilote pour que cette première hélice (31) puisse être entraînée par l'installation motrice (10) en vol de croisière et en vol stationnaire, et puisse ne être pas entraînée en rotation par l'installation motrice (10) au sol et en vol stationnaire,
- à une deuxième hélice (32) par l'intermédiaire d'un deuxième mécanisme différentiel (50") contrôlable par un pilote pour que cette deuxième hélice (32) puisse être entraînée par l'installation motrice (10) en vol de croisière et en vol stationnaire, et puisse ne être pas entraînée en rotation par l'installation motrice (10) au sol et en vol stationnaire.

6. Aéronef selon l'une quelconque des revendications 1 à 5,
**caractérisé en ce que** chaque demi-aile (21, 22) s'étendant transversalement à partir dudit fuselage (2) d'une zone d'emplanture (23) vers une zone extrémale (25) en passant par une zone intermédiaire (24) portant une hélice (30), ladite zone extrémale (25) est liée à ladite zone intermédiaire (24) par une articulation (26) contrôlable afin que ladite zone extrémale (25) soit manoeuvrée pour être dirigée vers le sol en vol stationnaire pour minimiser la surface de l'aile (20) impactée par l'air traversant la voilure tournante et pour protéger l'hélice d'un contact avec le sol.

## Patentansprüche

1. Flugzeug (1) mit einem Flugzeugrumpf (2), einer Antriebseinheit (10), einer Drehflügelanordnung (15) mit mindestens einem Hauptrotor (16), der mindestens teilweise den Auftrieb des Flugzeugs (1) sicherstellt, einem Flügel (20), der mindestens teilweise den Auftrieb des Flugzeugs (1) in einer Reiseflugphase sicherstellt, wobei der Flügel (20) zwei Halbflügel (21, 22) aufweist, die sich zu beiden Seiten des Flugzeugrumpfs (2) erstrecken, wobei das Flugzeug (1) mindestens zwei Schubpropeller (30) aufweist, die zu beiden Seiten des Flugzeugrumpfs (2) angeordnet und jeweils auf einem der Halbflügel (21, 22) des Flugzeugs (1) positioniert sind, welches einen Gegendrehmoment- und Regelheckrotor (35) aufweist,
wobei das Flugzeug ein Getriebesystem (40) aufweist, das die Antriebseinheit (10) mit jedem Hauptrotor (16) und mit dem Heckrotor (35) verbindet, um jeden Hauptrotor (16) und den Heckrotor (35) permanent anzutreiben, wobei das Getriebesystem (40) die Antriebseinheit (10) über einen auf Anfrage steuerbaren Differentialmechanismus (50) mit jedem Propeller (30) verbindet, damit jeder Propeller (30) in einer Reiseflugphase angetrieben werden kann und am Boden nicht zu einer Drehbewegung durch die Antriebseinheit (10) angetrieben werden kann, wobei der Differentialmechanismus (50) eines bestimmten Propellers (30) aufweist:
- ein Eingangsritzel (51), welches von der Antriebseinheit (10) über einen seitlichen Teil (45) des Getriebesystems (40) angetrieben wird, wobei das Eingangsritzel (51) fest mit einem Gehäuse (52) verbunden ist, welches mindestens ein Sonnenrad (54) trägt,
- eine Zwischenradwelle (55), die das Eingangsritzel (51) durchquert, wobei die Zwischenradwelle (55) drehfest mit einem Eingangsplanetenrad (56) verbunden ist, welches mit dem Sonnenrad (54) in Eingriff steht und von dem Eingangsritzel (51) rotationsmäßig entkoppelt ist,
- eine Propellerwelle (58), die den bestimmten Propeller (30) antreibt, wobei diese Propellerwelle (58) drehfest mit einem Ausgangsplanetenrad (57) verbunden ist, wobei dieses Ausgangsplanetenrad (57) mit dem Sonnenrad (54) in Eingriff steht,
- eine Propellerbremse (60) zum Abbremsen der Propellerwelle (58) und eine Eingangsbremse (65) zum Abbremsen der Zwischenradwelle (55).

2. Flugzeug nach Anspruch 1,
**dadurch gekennzeichnet, dass** das Flugzeug ein Steuermittel (70) aufweist, um
- die Propellerbremse (60) zu steuern, um die Propellerwelle (58) zu blockieren, und die Eingangsbremse (65) zu steuern, um die Zwischenradwelle (55) freizugeben, sodass eine Funktion des Anhaltens des Propellers (30) erfüllt wird, indem der Antrieb der Zwischenradwelle (55) durch den seitlichen Teil (45) erlaubt wird.
- die Propellerbremse (60) zu steuern, um die Propellerwelle (58) freizugeben, und die Eingangsbremse (65) zu steuern, um die Zwischenradwelle (55) zu blockieren, um eine Funktion der Übertragung der Drehbewegung des seitlichen Teils (45) auf die Propellerwelle (58) zu erfüllen, um diesen Propeller (30) in eine Drehbewegung zu versetzen.

3. Flugzeug nach einem der Ansprüche 1 bis 2,
**dadurch gekennzeichnet, dass** die Zwischenradwelle (55) mit einem Nebenaggregatsgetriebe (75) in Eingriff steht.

4. Flugzeug nach einem der Ansprüche 1 bis 3,
**dadurch gekennzeichnet, dass** die Zwischenradwelle (55) mit einem System zur Speicherung kinetischer Energie (80) verbunden ist.

5. Flugzeug nach einem der Ansprüche 1 bis 4,
**dadurch gekennzeichnet, dass** das Getriebesystem (40) die Antriebseinheit (10) verbindet mit:
- einem ersten Propeller (31), der von einem Piloten über einen ersten Differentialmechanismus (50') steuerbar ist, damit dieser Propeller (31) von der Antriebseinheit (10) in einer Reiseflugphase und einer stationären Flugphase angetrieben werden kann, und am Boden und in einer stationären Flugphase nicht durch die Antriebseinheit (10) zu einer Drehbewegung angetrieben werden kann,
- einem zweiten Propeller (32), der von einem Piloten über einen zweiten Differentialmechanismus (50") steuerbar ist, damit dieser zweite Propeller (32) von der Antriebseinheit (10) in einer Reiseflugphase und einer stationären Flugphase angetrieben werden kann, und am Boden und in einer stationären Flugphase nicht durch die Antriebseinheit (10) zu einer Drehbewegung angetrieben werden kann.

6. Flugzeug nach einem der Ansprüche 1 bis 5,
**dadurch gekennzeichnet, dass** jeder Halbflügel (21, 22), der sich quer, ausgehend von einem Flügelwurzelbereich (23) des Flugzeugrumpfs, zu einem Endbereich (25) über einen Zwischenbereich (24) erstreckt, der einen Propeller (30) trägt, wobei der Endbereich (25) mit dem Zwischenbereich (24) über ein steuerbares Gelenk (26) verbunden ist, damit der Endbereich (25) während einer stationären Flugphase so manövriert wird, dass er zum Boden hin gelenkt wird, um die Oberfläche des Flügels (20) zu minimieren, die von der Luft beaufschlagt wird, die den Drehflügel durchquert, und um den Propeller vor einem Kontakt mit dem Boden zu schützen.

## Claims

1. An aircraft (1) comprising a fuselage (2), a power plant (10), a rotary wing (15) provided with at least one main rotor (16) which at least partially provides the lift of the aircraft (1), a wing (20) which at least partially provides the lift of the aircraft (1) in cruising flight, said wing (20) comprising two half-wings (21, 22) extending on either side of the fuselage (2), said aircraft (1) comprising at least two pusher propellers (30) located on either side of the fuselage (2) and each positioned on one half-wing (21, 22), the aircraft (1) comprising an anti-torque and yaw-control tail rotor (35),
said aircraft comprising a transmission system (40) which connects the power plant (10) to each main rotor (16) and to the tail rotor (35) for permanently driving each main rotor (16) and the tail rotor (35), said transmission system (40) connecting the power plant (10) to each propeller (30) by means of a differential mechanism (50) which is controllable on request so that each propeller (30) can be driven in cruising flight and can be not driven in rotation by the power plant (10) on the ground, said differential mechanism (50) of a specific propeller (30) comprising:
- an input pinion (51) driven by the power plant (10) via a lateral portion (45) of said transmission system (40), said input pinion (51) being integral with a shell (52) bearing at least one planet gear (54),
- an idler shaft (55) passing through said input pinion (51), said idler shaft (55) being integral in rotation with an input sun gear (56) which meshes with the planet gear (54), and being disconnected in rotation from said input pinion (51),
- a propeller shaft (58) which drives said specific propeller (30), this propeller shaft (58) being integral in rotation with an output sun gear (57), this output sun gear (57) meshing with the planet gear (54),
- a propeller brake (60) for breaking said propeller shaft (58) and an input brake (65) for braking the idler shaft (55).

2. An aircraft according to Claim 1, **characterised in that** the aircraft comprises a control means (70) for:
- controlling the propeller brake (60) in order to block the propeller shaft (58) and controlling the input brake (65) in order to release the idler shaft (55) so as to fulfil a function of stopping the propeller (30) while permitting the idler shaft (55) to be driven by the lateral portion (45),
- controlling the propeller brake (60) in order to release the propeller shaft (58) and controlling the input brake (65) in order to block the idler shaft (55) so as to fulfil a function of transmitting the rotary motion from the lateral portion (45) to the propeller shaft (58) in order to cause this propeller (30) to rotate.

3. An aircraft according to any one of Claims 1 to 2, **characterised in that** said idler shaft (55) meshes with an accessory gearbox (75).

4. An aircraft according to any one of Claims 1 to 3, **characterised in that** said idler shaft (55) is connected to a kinetic-energy storage system (80).

5. An aircraft according to any one of Claims 1 to 4, **characterised in that** said transmission system (40) connects the power plant (10):
- to a first propeller (31) by means of a first differential mechanism (50') which can be controlled by a pilot so that this first propeller (31) can be driven by the power plant (10) in cruising flight and in hovering flight, and can be not driven in rotation by the power plant (10) on the ground and in hovering flight,
- to a second propeller (32) by means of a second differential mechanism (50') which can be controlled by a pilot so that this second propeller (32) can be driven by the power plant (10) in cruising flight and in hovering flight, and can be not driven in rotation by the power plant (10) on the ground and in hovering flight.

6. An aircraft according to any one of Claims 1 to 5, **characterised in that**, each half-wing (21, 22) extending transversely starting from said fuselage (2) from a root zone (23) to an end zone (25), passing through an intermediate zone (24) bearing a propeller (30), said end zone (25) is connected to said intermediate zone (24) by an articulation (26) which can be controlled so that said end zone (25) is manoeuvred to be directed towards the ground in hovering flight in order to minimise the area of the wing (20) against which the air passing through the rotary wing impacts and to protect the propeller from coming into contact with the ground.
